# EUROPEAN PATENT SPECIFICATION

(11) **EP 1 926 869 B1**
(45) Date of publication and mention of the grant of the patent: **13.04.2016**
(21) Application number: 05801099.2
(22) Date of filing: 23.09.2005
(51) Int. Cl.: E04H 3/16, E04H 4/16, E04H 4/12, C02F 1/461, C02F 1/467, C02F 5/00, C02F 103/00, C02F 103/02, C02F 103/42

(54) **POOL CLEANER WITH INTEGRAL CHLORINE GENERATOR**
SCHWIMMBECKENREINIGER MIT INTEGRALEM CHLORERZEUGER
DISPOSITIF DE NETTOYAGE DE PISCINE AVEC GÉNÉRATEUR DE CHLORE INTÉGRAL

(43) Date of publication of application: 04.06.2008
(73) Proprietor: Aqua Products, Inc., Cedar Grove, NJ 07009 (US)
(72) Inventor: PORAT, Joseph, Delray Beach, FL 33483 (US)
(74) Representative: Carpintero Lopez, Francisco
(86) International application number: PCT/US2005/034233
(87) International publication number: WO 2007/040490

(56) References cited:
- FR-A1- 2 685 374
- US-A- 4 097 356
- US-A- 4 462 113
- US-A- 4 724 059
- US-A- 5 882 512
- US-A- 5 882 512
- US-A1- 2005 067 300
- US-A1- 2005 067 300

## Description

### Field of the Invention

This invention relates to electrochemical chlorine generators for use in chlorinating swimming pools.

### Background of the Invention

Electrochemical chlorine generators are available from a number of commercial sources for use in establishing and maintaining bactericidal levels of chlorine ions in swimming pools. The terms "Chlorine" "Sodium hypochlorite" and "chlorine ions" are used interchangeably herein to refer to the bactericidal ionic form. Electrochemical chlorine generators are installed in-line with the main pumping and filter system outside of the pool. These devices are relatively expensive to purchase and require the services of an experienced plumber and an electrician for their proper installation. Intermittent operation of the generator is required in order to maintain the desired concentration of chlorine. In one automated control system, a probe is immersed in the pool at a representative location in the pool and the probe electronically transmits a signal to a remote poolside controller which, in turn, controls the periodic operation of the cathodic chorine generator. The probe and controller assembly are also expensive to purchase and do require maintenance.

The use of these permanently installed electrochemical generator systems is typically limited to larger commercial and institutional pools where the convenience associated with the essentially continuously controlled introduction of chlorine ions into the pool outweighs the initial costs. These devices also eliminate the need for the purchase of chemicals and either the use of maintenance personnel or automated chemical injection systems.

The initial capital outlay for the purchase of the equipment, as well as the expenses associated with installation by plumbers and electricians, generally discourage the use of electrochemical chlorine generators for the residential pool market. However, saltwater electrochemical chlorinators do produce a highly effective bactericidal sanitizer from a mild saltwater solution that pool users generally find less objectionable than chlorine-producing chemicals typically used in residential pools.
Additional background relating to the state of the art is disclosed in FR2685374, US2005/0067300 and US8882512

It is therefore an object of the present invention to provide a method and apparatus for generating and adding chlorine to pools that is essentially self-contained and the use of which requires no installation services by a plumber and requires no separate or specialized electrical power connections for its operation.

It is yet another object of the invention to provide a method and apparatus for providing the desired concentration of chlorine ions from an electrochemical generator that relies on conventional test methods used for residential pools, thereby avoiding the necessity of using expensive electronic probes and data processing and transmission control systems.

A further object of the invention is to provide an apparatus and method utilizing an electrochemical chlorine generator that efficiently and effectively distributes the chlorine throughout the volume of water in the pool so as to provide a uniform concentration of the desired chlorine ions and thereby avoid the localized high concentration regions associated with the apparatus and methods of the prior art.

Another object of the invention is to provide an automated system utilizing an electrochemical chlorine generator mounted on a robotic pool cleaner, the operation of the generator being controlled by signals derived from a submerged sampling probe and transmitted either directly or indirectly via a relay receiver/transmitter to the processor/controller on board the pool cleaner.

### Summary of the Invention

The above objects and other advantages are achieved by the method and apparatus of the present invention in which a robotic pool cleaner is provided with an electrochemical chlorine generator which produces and distributes chlorine ions throughout the pool water as the cleaner moves across the pool surfaces being cleaned.

In one preferred embodiment, the pool cleaner operates in a preprogrammed mode designed to efficiently clean the entire surface of the bottom wall and, optionally, the side walls of the pool. The mode of operation during cleaning is not a part of the present invention, and any random or closely prescribed patterns for scanning the pool wall surfaces known to the art can be used. During the execution of the cleaning program, the on-board chlorine generator is activated so long as the desired concentration of chlorine in the pool water has not been attained. Once the desired value is reached, the operation of the chlorine generator is terminated, and the pool cleaner continues its programmed cleaning operation.

In one embodiment, where the cleaning program has been completed, or for other reasons it is not desirable to initiate the cleaning program, the automated pool cleaner can be programmed to periodically move to a new location on the bottom of the pool to equalize the distribution of chlorine ions in the pool. The robotic pool cleaner's programming and mode of operation is adapted to insure that the cleaner with its on-board chlorine generator moves to distribute chlorine throughout the pool. In a preferred embodiment, the pool cleaner is moved to a new location after about ten minutes, maintained in this position for about ten minutes and again moved to a new location. The chlorine is generated continuously during movement and while at each new location.

In the practice of the invention, the person responsible for maintaining the pool periodically checks the chlorine and pH levels in accordance with the standard procedures utilized for pool maintenance. When the chlorine concentration reaches the predetermined desired level, the operation of the on-board electrochemical generator is discontinued. Based upon a period of cyclic operation, the time required to attain the proper chlorine concentration in the pool will become known to the responsible individual. Assuming predictable weather patterns, including sunlight, rain and temperature range, the time of operation of the on-board chlorine generator required to provide the desired chlorine ion concentration can be predicted with reasonable certainty.

The method includes the addition of a sufficient concentration of chlorine-containing chemical compound to the fresh water in the swimming pool to provide for the efficient generation of chlorine by the electrochemical generator housed in the moving pool cleaner. One readily available and economical form of chlorine-containing compound that is convenient to use is sodium chloride, i.e., table salt. Sodium chloride in crystalline form is readily soluble at the required concentrations. The salt can be added to provide a concentration of from about 1,000 parts per million (ppm) to about 3,000 ppm. For purposes of comparison, human tears contain approximately 3,200 ppm of sodium chloride. This level of salt is well below that of typical sea water and is not found objectionable by the average person using the pool. The amount of table salt added to a 94635 liter (25,000 gallon) pool is about 286 kg (630 pounds).

The frequency and quantity of salt containing chlorine to be added to the pool is also determined based upon operating experience. Since the chlorine ions generated eventually recombine with the sodium ions, the requirements for adding salt are very low. This provides a further advantage to the present invention.

In one preferred embodiment of the invention, the pool cleaner is equipped with one or more rechargeable on-board batteries and the power requirements of the on-board computer processor/controller, the pump and the drive system are all within the operational capacity of the battery. Alternatively, a separate power source can provide the power requirements to the pool cleaner via a conventional cable from a poolside power supply.

In a further preferred alternative embodiment, the processor/controller is programmable by the user to activate the chlorine generator for prescribed periods of time while the pool cleaner is in operation. As was discussed above, the individual responsible for maintenance of the pool will determine empirically, based on experience, the appropriate times and duration of operation during a predetermined period, such as a day. The control system also has a positive *onJ*off switch so that the chlorine generator can be taken out of service in the event that the desired chlorine level is exceeded by the programmed operation.

When the invention is employed in an automated, self-propelled pool cleaner that receives its power through a cable from a remote power supply, or transformer, typically located at poolside, the electrochemical chlorine generator can also be powered by the same source. In this embodiment, the power supply can include a separate switch for stopping and starting the chlorine generator.

The method and apparatus of the invention can also be used with a robotic pool cleaner that utilizes a remote pump and filter that draws water through a hose or conduit. In order to avoid disabling the turbine, water passing its blades should be free of debris.

In another preferred embodiment, a robotic pool cleaner having an internal water pump and an associated discharge conduit is provided with an electricity generating dynamo powered by a water turbine positioned in the stream discharged from the water pump, the electrical energy derived from the dynamo being utilized to power the electrochemical chlorine generator to produce chlorine ions that are distributed to the surrounding water in the pool.

The water turbine of the dynamo is preferably positioned for rotation in the flow path of the water stream discharged from the pump that draws the pool water and debris through the cleaner's filter system. Alternatively, the turbine can be positioned between the filter and the intake or upstream side of the pump.

The electrical power requirements for an electrochemical chlorine generator for use in the invention is in the range of from 7 to 11 volts at about 8 to 9 amps. Chlorine generating units are commercially available from a number of suppliers, that may be adaptable for use in the present invention. The construction of a suitable device is described in detail below. As a general rule, one ampere of current is required to produce one gram of chlorine.

In the embodiment employing a water turbine as the source of electrical power to the electrochemical generators, the turbine impeller is preferably placed. with its axis of rotation in line with the water discharged from the pump. The electrical energy generated by the dynamo is delivered to the electrochemical chlorine generator. The chlorine is mixed with, and discharged from the interior of the pool cleaner housing with the water drawn through the filter and is thereby distributed throughout the water in the vicinity of the pool cleaner by the turbulent movement of the discharge.

### Brief Description of the Drawings

The invention will be further described below and with reference to the attached drawings in which
FIG. 1 is a schematic cross-sectional view of one preferred embodiment of the invention in a pool cleaner having an external power supply;
FIG. 2 is a schematic cross-sectional view of an alternative preferred embodiment in which the pool cleaner has an on-board battery and a water turbine power source for the chlorine generator suitable for use in the invention; and
FIG. 3 is a front elevation view of an on-board electrochemical chlorine generator; and
FIG. 4 is a side elevation view of the device of FIG. 3.

### Detailed Description of the Preferred Embodiments

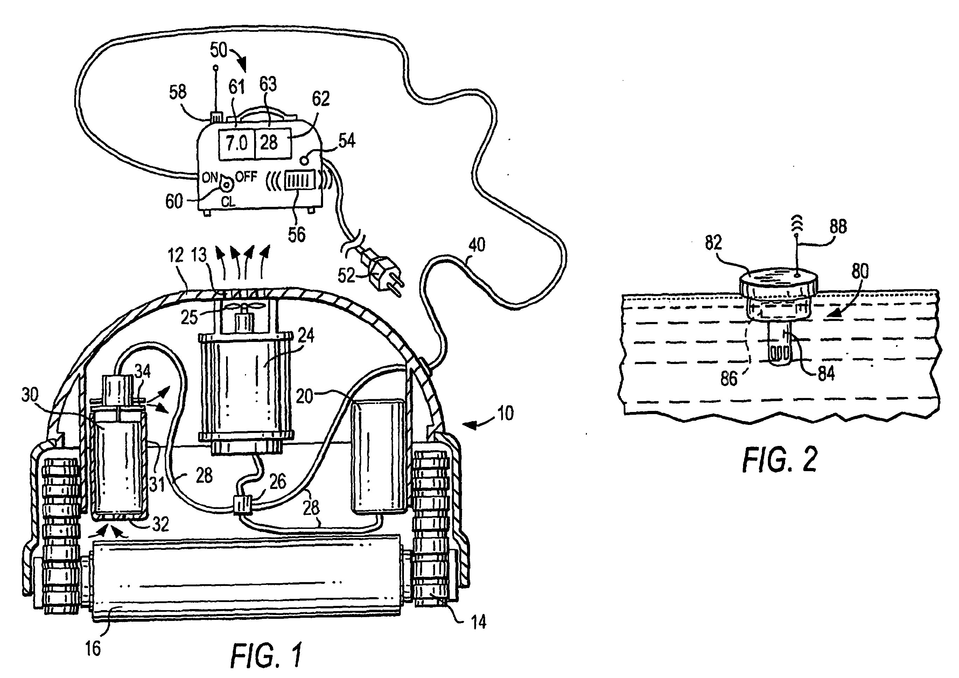

Referring now to Fig. 1, there is illustrated one preferred embodiment of the invention in which a robotic pool cleaner 10 is electrically connected via cable 40 to remote poolside power supply 50. For the purposes of describing this invention, the principal elements illustrated are the pool cleaner body or housing 12, a pair of drive means 14 and cleaning brush 16, the drive means being powered by drive motor 20. Also mounted in the housing is a conventional pump motor 24 with attached impeller 25 that draws water through a filter element (not shown) and discharges the filtered water through outlet 13 in the housing 12. Also mounted on the interior of the housing is electrochemical chlorine generator 20 having inlets 32 through which salt water passes and, as a result of the electrolysis, generates chlorine ions that are dissolved in the water that is discharged through outlets 34. As will be understood by one of ordinary skill in the art, the flow of water through this otherwise conventional pool cleaner housing is through intake openings at the lower portion of the housing and/or base plate and upwardly through a filter where debris is removed and entrained; the water is then discharged through housing outlet 13.

In the preferred embodiment illustrated, an electronic processor/controller in the form of a integrated circuit device 26 is connected by a plurality of conductors 28 to the floating power cable 40 and also to the drive motor 20, pump motor 24 and electrochemical generator 30.

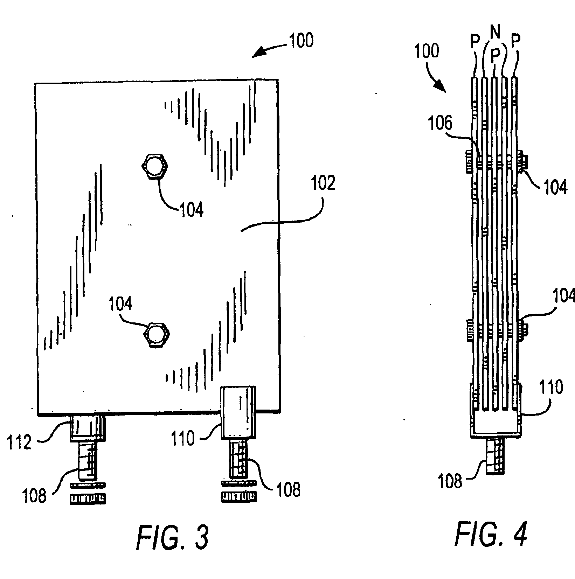

Referring now to FIGS. 3 and 4, there is illustrated an electrolyte cell 100 suitable for use on board a pool cleaner to generate chlorine during operation. In this embodiment, the cell consists of five titanium plates with a 6 micron coating of mixed metal oxides of titanium, ruthenium and iridium measuring approximately 60 x 80 mm and maintained in spaced relation by nylon fasteners 104 and insulated spacers 106. A threaded mounting and terminal bolt 108 is attached to conductor bracket 110 for receiving and applying a positive charge to the two exterior and one central plates labelled "P". Conductor bracket 112 delivers an opposing negative charge to the intermediate plates labelled "N". The plates are approximately 1 mm thick with a gap of 1.5mm.

The cell is conveniently secured in a non-conductive, corrosion resistant polymer housing 31 for secure mounting on the pool cleaner housing 12. The housing 31 is preferably cast polycarbonate, but can also be made from ABS or PVC. Terminals 108 are fitted with electrical conductors 28 secured by brass nuts and epoxy to provide the required voltage and amps from the power supply.

The cell is designed for operation at a production rate of about 8 grams of sodium hypochlorite/hour. The water containing the active chlorine ion must be moved away from the generator and circulated for mixing with the pool water as efficiently as possible due to the relatively short effective lifetime of the ion.

In one simplified method of operation of the on-board chlorine generator, the individual responsible for proper maintenance of the water conditions in the pool periodically samples the chlorine concentration manually. If the concentration is below the desired value, the switch 60 on power supply 50 is manually turned to the on position, the effect of which is either to send power directly tbrough a separate wire in cable 40 to the chlorine generator 30 or to transmit a signal to processor/controller 26 causing the electrical power to be routed to generator 30.

Continuing with the description of this first embodiment, after a prescribed time interval, the pool water is again sampled for free chlorine concentration. If the desired level has not been achieved, no action is taken and the pool cleaner continues to move through its programmed cycle and the chlorine generator 30 continues to produce chlorine ions that are discharged into the surrounding water and mixed by way of the turbulent action of the pump discharge stream and movement of the cleaner as determined by the program in the processor/controller 26. After a further prescribed interval, the water is again sampled and at such time as the desired concentration of chlorine is reached or exceeded, switch 60 on the power supply is turned to the off position thereby shutting down the chlorine generator. As this process is repeated on a routine basis, the frequency and duration of the related on-off time intervals will establish at least an approximate schedule for operating the electrochemical chlorine generator.

In a further preferred embodiment, the process/controller 26 is programmable by the user to initiate and terminate chlorine generation while the pool cleaner is operating in its customary cleaning mode. As will be understood from the above description, the manual programming of processor/controller 26 will be based upon the experience of the user developed over a suitable period of time, which may be from a few days up to a week or two weeks. Such adjustments may be based upon geographical and seasonal conditions and expectations of sunshine, temperature, daytime exposure to the sun and periods of shade.

A further preferred embodiment will be described with reference to Fig. 2. In this embodiment, the apparatus of the pool cleaner as described in Fig. 1 is used in conjunction with an automated electronic probe 80 that periodically measures the chlorine ion concentration in the pool water. The floating probe 80 can either be tethered to a fixed position or allowed to float randomly on the surface of the pool. The probe 80 includes a housing 82, sampling port 84 with internal electronic ion analyzer (not shown) and is powered by battery 86. A signal corresponding to the periodic analytical results is transmitted via antenna 88 using approved radio frequency (RF) signals. In this embodiment, a floating probe is illustrated, but the probe can be permanently attached to a wall of the pool.

In the embodiment illustrated, the power supply 50 conveniently includes a receiver attached to antenna 58 and a relay transmitter for communicating the signal to a processor contained in either the power supply 50 or the on-board processor/controller 26. When the signal from probe 80 indicates a concentration below the desired value, the relay transmitter in power supply 50 sends an appropriate signal to maintain the operation of the chlorine generator on the pool cleaner. Alternatively, if the probe signal corresponds to an acceptable concentration of chlorine in the pool water, the relay transmitter signals the controller/processor 26 to discontinue supplying power to the generator.

As will be understood by one of ordinary skill in the art, the relay receiver and relay transmitter can be incorporated in a separate housing and provided with a separate source of power. Other features described below can also be included in this separate unit.

In the event that the pool cleaner has completed its cleaning cycle before the desired concentration of chlorine has been achieved the controller/processor continues to direct the movement of the pool cleaner. Similarly, if the chlorine level has been achieved and the pool cleaner has completed its cleaning pattern, the power to the pool cleaner is terminated. Should the probe 80 signal a need for further chlorine generation while the pool cleaner is in the off mode, a signal is sent to the controller/processor 26 to initiate both the movement of the pool cleaner and activation of the chlorine generator. In this manner, chlorine is distributed by the movement of the pool cleaner throughout the body of water in which it is moving.

In a further preferred embodiment of the control system of the invention illustrated in FIG 1, the relay transmitter located in power supply unit 50 includes a visual display alarm 54, which can be a flashing light source, and/or an audible alarm 56. The alarms are programmed to function when the chlorine concentration as determined by the signal from probe 80 exceeds a prescribed value. The alarms can also be programmed to function if the chlorine concentration has been below a predetermined minimum acceptable value for a predetermined interval, thereby indicating that the electrochemical generator is not functioning properly and that remedial action is required.

With continuing reference to the power supply unit 50, a visual display panel 62, e.g., an LED display, is provided to indicate the numeric values of the water qualities as determined by the probe 80. The panel display 62 preferably includes a separate display 61 for pH and a display 63 for chlorine concentration. Alternatively, a single LED panel can display one, or a plurality of values in a pre-programmed or manually selected sequence.

While various illustrative embodiments have been described in detail, further modifications and variations in the apparatus and method of the invention will be apparent to those of ordinary skill in the art. The full range and scope of the invention, and its equivalents, is therefore to be determined with reference to the claims that follow.

## Claims

1. A self-propelled pool cleaner having a housing (12), a pump (24, 25) for moving water through the housing, drive means (14) for moving the pool cleaner over at least the bottom wall of a pool, an integral electrochemical chlorine generator (30) positioned on said housing for producing bactericidal chlorine ions from a chlorine-containing compound dissolved in the pool water; a source of electrical power operatively connected to the electrochemical chlorine generator (30), and an outlet (34) for discharging water containing the bactericidal chlorine ions produced by the electrochemical generator into the water proximate the exterior of the pool cleaner housing; **characterized in that**:
the electrochemical generator (30) comprises a plurality of negative and positive conductive plates (P, N) arranged in a parallel spaced-apart array to form a plurality of passageways, the array being positioned in the flowpath of water moving through the housing;
the pool cleaner comprises control means (26) for initiating and terminating the operation of the chlorine generator, the control means (26) including a processor/controller operatively connected to a signal receiver, whereby a control signal received from a remote relay transmitter is processed to initiate and terminate the operation of the chlorine generator (30) in response to information corresponding to the bactericidal chlorine ion concentration in the pool water.

2. The pool cleaner of claim 1 in which the pump is inside the housing and which further includes a filter, wherein the outlet for discharging water containing bactericidal chlorine ions receives the water discharged by the pump.

3. The pool cleaner of claim 1, wherein the source of electrical power is a remote power supply and an electric cable connected to the electrochemical generator in the interior of the housing.

4. The pool cleaner of claim 3, wherein the control means includes an on/off switch on the remote power supply and the switch is manually or electronically activated.

5. The pool cleaner of claim 1, wherein the bactericidal chlorine is derived from sodium chloride dissolved in the pool water.

6. The pool cleaner of claim 1, wherein the bactericidal chlorine is derived from chloride compounds present in seawater contained in the pool.

7. The pool cleaner of claim 1, wherein the source of electrical power is a water-powered dynamo/generator operatively positioned for rotation in a stream of water that is discharged from the pool cleaner housing.

8. The pool cleaner of claim 1 that includes an electronic probe positioned in the pool for determining the concentration of bactericidal chlorine ions in the pool water and transmitting a signal to the relay transmitter for processing and transmission of an appropriate control signal to the pool cleaner processor/controller.

9. The pool cleaner of claim 1, wherein the signal receiver is an antenna extending from the pool cleaner processor/controller to the surface of the pool water.

10. The pool cleaner of claim 1 where the processor/controller is programmable by a user to activate the electrochemical generator for prescribed periods of time.

11. A method of releasing a bactericidal amount of chlorine ions in the water of a pool comprising:
a. adding to the pool a water-soluble chlorine-containing chemical compound;
b. placing into the pool a pool cleaner according to any claim from 1 to 10;
c. activating the pool cleaner drive means (14) to thereby move the pool cleaner across the surface of a wall of the pool;
d. initiating the operation of the chlorine generator (30) to thereby produce bactericidal chlorine ions from the chlorine-containing compound dissolved in the water; and
e. discharging bactericidal chlorine ion-containing water from the pool cleaner in a turbulent flow to mix with the water in the pool to provide a bactericidal amount of chlorine ions, **characterized in that** it comprises:
f. periodically measuring the bactericidal chlorine concentration in the pool water and comparing the measured value to a predetermined desired concentration of bactericidal chlorine;
g. transmitting from a remote relay transmitter a control signal to a signal receiver that is operatively connected to a processor/controller for processing and initiating and terminating the operation of the chlorine generator in response to information corresponding to the bactericidal chlorine ion concentration in the pool water; and
h. terminating the operation of the chlorine generator when the measured value reaches the predetermined desired concentration.

12. The method of claim 11, wherein the electrical power is delivered to the electrochemical generator from a source selected from the group consisting of an on-board rechargeable battery, a water dynamo/generator mounted on the pool cleaner and a remote power supply electrically connected to the pool cleaner by a cable.

13. The method of claim 11, wherein the water contacting the electrochemical generator is discharged from the pool cleaner housing after passing through a filter that removes debris suspended in the water.

14. The method of claim 11, wherein the bactericidal chlorine is generated from dissolved sodium chloride.

15. An automated system for establishing and maintaining a predetermined concentration of bactericidal chlorine ions in a pool, the system comprising:
a pool cleaner according to any one of the claims from 1 to 10;
a relay transmitter for transmitting signals to the control means, whereby the operation of the electrochemical generator is initiated when the concentration is below the predetermined value and terminated when the predetermined value is reached or exceeded.

16. The system of claim 15, wherein the signal is transmitted from the relay transmitter to the control means by an electrical conductor.

17. The system of claim 15, wherein the signal transmission from the relay transmitter to the control means is wireless.

18. The system of claim 15 in which the probe is powered by a battery.

## Patentansprüche

1. Selbstangetriebener Schwimmbeckenreiniger, der Folgendes aufweist: ein Gehäuse (12), eine Pumpe (24, 25) zum Bewegen von Wasser durch das Gehäuse, Antriebsmittel (14) zum Bewegen des Schwimmbeckenreinigers über zumindest die Bodenwand eines Schwimmbeckens, einen integralen elektrochemischen Chlorerzeuger (30), der auf dem Gehäuse positioniert ist, zum Herstellen von bakterienabtötenden Chlorionen aus einer Chlor enthaltenden Verbindung, die in dem Schwimmbeckenwasser gelöst ist; eine Quelle elektrischer Energie, die betriebsfähig mit dem elektrochemischen Chlorerzeuger (30) verbunden ist, und einen Auslass (34) zum Ablassen von Wasser, das die bakterienabtötenden Chlorionen enthält, die von dem elektrochemischen Erzeuger hergestellt wurden, in das Wasser in der Nähe des Äußeren des Schwimmbeckenreinigergehäuses; **dadurch gekennzeichnet, dass**:
der elektrochemische Erzeuger (30) eine Vielzahl von negativen und positiven leitenden Platten (P, N) umfasst, die in einer parallelen, voneinander beabstandeten Anordnung angeordnet sind, um eine Vielzahl von Durchgängen zu bilden, wobei die Anordnung in dem Strömungsweg des Wassers positioniert ist, das sich durch das Gehäuse bewegt;
der Schwimmbeckenreiniger ein Steuermittel (26) zum Beginnen und Beenden des Betriebs des Chlorerzeugers umfasst, wobei das Steuermittel (26) einen Prozessor/Controller umfasst, der betriebsfähig mit einem Signalempfänger verbunden ist, wodurch ein Steuersignal, das von einem entfernten Relaissender empfangen wird, verarbeitet wird, um den Betrieb des Chlorerzeugers (30) zu beginnen und zu beenden als Reaktion auf Informationen, die der Konzentration der bakterienabtötenden Ionen in dem Schwimmbeckenwasser entsprechen.

2. Schwimmbeckenreiniger nach Anspruch 1, bei dem die Pumpe in dem Gehäuse ist und das überdies ein Filter umfasst, wobei der Auslass für das Ablassen von Wasser, das bakterienabtötende Chlorionen enthält, das Wasser empfängt, das von der Pumpe abgelassen wird.

3. Schwimmbeckenreiniger nach Anspruch 1, wobei die Quelle elektrischer Energie eine Fernstromversorgung und ein elektrisches Kabel ist, das an den elektrochemischen Erzeuger im Inneren des Gehäuses angeschlossen ist.

4. Schwimmbeckenreiniger nach Anspruch 3, wobei das Steuermittel einen Ein-/Ausschalter an der Fernstromversorgung umfasst und wobei der Schalter von Hand oder elektronisch aktiviert wird.

5. Schwimmbeckenreiniger nach Anspruch 1, wobei das bakterienabtötende Chlor aus Natriumchlorid erhalten wird, das in dem Schwimmbeckenwasser gelöst ist.

6. Schwimmbeckenreiniger nach Anspruch 1, wobei das bakterienabtötende Chlor aus Chlorverbindungen erhalten wird, die in Meerwasser, das in dem Schwimmbecken enthalten ist, vorliegen.

7. Schwimmbeckenreiniger nach Anspruch 1, wobei die Quelle elektrischer Energie ein wassergetriebener Dynamo/Generator ist, der betriebsfähig zum Drehen in einem Wasserstrom positioniert ist, der aus dem Schwimmbeckenreinigergehäuse abgelassen wird.

8. Schwimmbeckenreiniger nach Anspruch 1, der eine elektronische Sonde umfasst, die in dem Schwimmbecken positioniert ist, um die Konzentration von bakterienabtötenden Chlorionen in dem Schwimmbeckenwasser zu bestimmen und ein Signal an den Relaissender zu übertragen für die Verarbeitung und Übertragung eines geeigneten Steuersignals an den Prozessor/Controller des Schwimmbeckenreinigers.

9. Schwimmbeckenreiniger nach Anspruch 1, wobei der Signalempfänger eine Antenne ist, die sich von dem Prozessor/Controller des Schwimmbeckenreinigers bis zur Oberfläche des Schwimmbeckenwassers erstreckt.

10. Schwimmbeckenreiniger nach Anspruch 1, wobei der Prozessor/Controller durch einen Benutzer programmierbar ist, um den elektrochemischen Erzeuger für vorbestimmte Zeitstrecken zu aktivieren.

11. Verfahren zum Freigeben einer bakterienabtötenden Menge Chlorionen in das Wasser eines Schwimmbeckens, umfassend:
a. Hinzugeben einer wasserlöslichen, Chlor enthaltenden chemischen Verbindung in das Schwimmbecken;
b. Platzieren eines Schwimmbeckenreinigers nach einem der Ansprüche 1 bis 10 im Schwimmbecken;
c. Aktivieren der Schwimmbeckenreiniger-Antriebsmittel (14), um dadurch den Schwimmbeckenreiniger über die Oberfläche einer Wand des Schwimmbeckens zu bewegen;
d. Beginnen des Betriebs des Chlorerzeugers (30), um dadurch bakterienabtötende Chlorionen aus der Chlor enthaltenden Verbindung herzustellen, die in dem Wasser gelöst ist; und
e. Ablassen von Wasser, das bakterienabtötende Chlorionen enthält, aus dem Schwimmbeckenreiniger in eine turbulente Strömung, um sich mit dem Wasser in dem Schwimmbecken zu vermischen, um eine bakterienabtötende Menge Chlorionen bereitzustellen, **dadurch gekennzeichnet, dass** es Folgendes umfasst:
f. regelmäßiges Messen der Konzentration des bakterienabtötenden Chlors im Schwimmbeckenwasser und Vergleichen des gemessenen Werts mit einer vorbestimmten gewünschten Konzentration bakterienabtötenden Chlors;
g. Übertragen eines Kontrollsignals von einem entfernten Relaissender an einen Signalempfänger, der betriebsfähig mit einem Prozessor/Controller verbunden ist für das Verarbeiten und Beginnen und Beenden des Betriebs des Chlorerzeugers in Reaktion auf Informationen, die der Konzentration von bakterienabtötenden Chlorionen im Schwimmbeckenwasser entsprechen; und
h. Beenden des Betriebs des Chlorerzeugers, sobald der gemessene Wert die vorbestimmte gewünschte Konzentration erreicht.

12. Verfahren nach Anspruch 11, wobei die elektrische Energie an den elektrochemischen Erzeuger aus einer Quelle geliefert wird, die ausgewählt ist aus der Gruppe bestehend aus einem integrierten Akkumulator, einem Wasserdynamo/Generator, der auf den Schwimmbeckenreiniger montiert ist, und einer Fernstromversorgung, die über ein Kabel elektrisch an den Schwimmbeckenreiniger angeschlossen ist.

13. Verfahren nach Anspruch 11, wobei das Wasser, das den elektrochemischen Erzeuger berührt, aus dem Schwimmbeckenreinigergehäuse abgelassen wird, nachdem es durch ein Filter gelangt, das Rückstände, die im Wasser suspendiert sind, entfernt.

14. Verfahren nach Anspruch 11, wobei das bakterienabtötende Chlor aus gelöstem Natriumchlorid erzeugt wird.

15. Automatisiertes System für das Herstellen und Beibehalten einer vorbestimmten Konzentration bakterienabtötender Chlorionen in einem Schwimmbecken, wobei das System Folgendes umfasst:
einen Schwimmbeckenreiniger nach einem der Ansprüche 1 bis 10;
einen Relaissender für das Übertragen von Signalen an das Steuermittel, wodurch der Betrieb des elektrochemischen Erzeugers begonnen wird, wenn die Konzentration unter dem vorbestimmten Wert liegt, und beendet wird, wenn der vorbestimmte Wert erreicht oder überschritten wird.

16. System nach Anspruch 15, wobei das Signal durch einen elektrischen Leiter von dem Relaissender an das Steuermittel übertragen wird.

17. System nach Anspruch 15, wobei die Signalübertragung von dem Relaissender an das Steuermittel drahtlos ist.

18. System nach Anspruch 15, bei dem die Sonde durch eine Batterie betrieben ist.

## Revendications

1. Un nettoyeur de piscine autopropulsé comportant un boîtier (12), une pompe (24, 25) pour faire passer de l'eau à travers le boîtier, des moyens d'entraînement (14) pour déplacer le nettoyeur de piscine sur au moins le fond d'une piscine, un générateur de chlore électrochimique intégré (30) positionné sur ledit boîtier pour produire des ions de chlore bactéricides à partir d'un composé contenant du chlore dissous dans l'eau de la piscine; une source d'énergie électrique reliée de manière opérationnelle au générateur de chlore électrochimique (30) et un orifice de décharge (34) pour évacuer l'eau contenant les ions de chlore bactéricide produits par le générateur électrochimique dans l'eau entourant l'extérieur du boîtier du nettoyeur de piscine; **caractérisé en ce que**:
- le générateur électrochimique (30) comprend une pluralité de plaques conductrices négatives et positives (P, N) disposées selon un réseau de plaques parallèles espacées pour former une pluralité de passages, ce réseau étant disposé dans le courant d'eau en mouvement dans le boîtier;
- le nettoyeur de piscine comprend des moyens de commande (26) pour amorcer et interrompre le fonctionnement du générateur de chlore, les moyens de commande (26) incluant un processeur/contrôleur connecté de manière opérationnelle à un récepteur de signaux, grâce à quoi un signal de commande reçu d'un émetteur-relais situé à distance est traité pour amorcer et interrompre le fonctionnement du générateur de chlore (30) en réponse à des informations correspondant à la concentration en ions de chlore bactéricide dans l'eau de la piscine.

2. Le nettoyeur de piscine selon la revendication 1, dans lequel la pompe est située à l'intérieur du boîtier et inclut en outre un filtre, où l'orifice de décharge de l'eau contenant des ions de chlore bactéricide reçoit l'eau évacuée par la pompe.

3. Le nettoyeur de piscine selon la revendication 1, dans lequel la source d'énergie électrique est une alimentation électrique située à distance et un câble électrique connecté au générateur électrochimique disposé à l'intérieur du boîtier.

4. Le nettoyeur de piscine selon la revendication 3, dans lequel les moyens de commande incluent un interrupteur marche/arrêt sur l'alimentation électrique située à distance et l'interrupteur est activé manuellement ou électroniquement.

5. Le nettoyeur de piscine selon la revendication 1, dans lequel le chlore bactéricide est obtenu à partir de chlorure de sodium dissous dans l'eau de la piscine.

6. Le nettoyeur de piscine selon la revendication 1, dans lequel le chlore bactéricide est obtenu à partir des composés chlorés présents dans l'eau de mer contenue dans la piscine.

7. Le nettoyeur de piscine selon la revendication 1, dans lequel la source d'énergie électrique est une générateur/dynamo alimenté à l'eau disposé pour permettre sa rotation dans un courant d'eau qui s'échappe du boîtier du nettoyeur de piscine.

8. Le nettoyeur de piscine selon la revendication 1, qui comprend une sonde électronique placée dans la piscine pour déterminer la concentration d'ions de chlore bactéricide dans l'eau de la piscine et transmettre un signal à l'émetteur-relais pour le traitement et la transmission d'un signal de commande approprié au processeur/contrôleur du nettoyeur de piscine.

9. Le nettoyeur de piscine selon la revendication 1, dans lequel le récepteur de signaux est une antenne reliant le processeur/contrôleur du nettoyeur de piscine à la surface de l'eau de la piscine.

10. Le nettoyeur de piscine selon la revendication 1, dans lequel le processeur/contrôleur est programmable par un utilisateur pour activer le générateur électrochimique pour des périodes de temps prédéfinies.

11. Un procédé de libération d'une quantité d'ions de chlore bactéricide dans l'eau d'une piscine comprenant:
a. l'ajout à la piscine d'un composé chimique soluble dans l'eau contenant du chlore;
b. l'introduction dans la piscine d'un nettoyeur de piscine selon l'une quelconque des revendications 1 à 10;
c. l'activation des moyens d'entraînement du nettoyeur de piscine (14) pour ainsi déplacer le nettoyeur de piscine le long de la surface des parois de la piscine;
d. l'amorçage du fonctionnement du générateur de chlore (30) pour produire ainsi des ions de chlore bactéricide à partir du composé contenant du chlore dissous dans l'eau; et
e. la décharge de l'eau contenant les ions chlore bactéricide contenue dans le nettoyeur de piscine en un écoulement turbulent pour mélanger cette eau avec l'eau de la piscine et fournir une quantité d'ions de chlore bactéricide,
ce procédé étant **caractérisé en ce que** il comprend:
f. la mesure périodique de la concentration de chlore bactéricide dans l'eau de la piscine et la comparaison de la valeur mesurée à une concentration en chlore bactéricide prédéterminée souhaitée;
g. la transmission depuis un émetteur-relais situé à distance d'un signal de commande à un récepteur de signaux qui est relié de manière opérationnelle à un processeur/contrôleur pour le traitement, l'amorçage et l'interruption du fonctionnement du générateur de chlore en réponse à une information correspondant à la concentration en ions de chlore bactéricide de l'eau de la piscine; et
h. l'interruption du fonctionnement du générateur de chlore lorsque la valeur mesurée atteint la concentration prédéterminée souhaitée.

12. Le procédé selon la revendication 11, dans lequel la puissance électrique est délivrée au générateur électrochimique à partir d'une source choisie dans le groupe constitué par un accumulateur de bord rechargeable, un générateur/dynamo à eau monté sur le nettoyeur de piscine et une source d'alimentation à distance connectés électriquement au nettoyeur de piscine par un câble.

13. Le procédé selon la revendication 11, dans lequel l'eau au contact du générateur électrochimique est retirée du nettoyeur de piscine après passage au travers d'un filtre qui élimine les débris suspendus dans l'eau.

14. Le procédé selon la revendication 11, dans lequel le chlore bactéricide est généré à partir de chlorure de sodium dissout.

15. Un système automatisé pour établir et maintenir une concentration prédéterminée d'ions de chlore bactéricide dans une piscine, le système comprenant:
un nettoyeur de piscine selon l'une quelconque des revendications 1 à 10,
un émetteur-relais pour transmettre des signaux aux moyens de commande de sorte que le fonctionnement du générateur électrochimique est amorcé lorsque la concentration est inférieure à la valeur prédéterminée et interrompu lorsque la valeur prédéterminée est atteinte ou dépassée.

16. Le système selon la revendication 15, dans lequel le signal est transmis à partir de l'émetteur-relais aux moyens de commande par un conducteur électrique.

17. Le système selon la revendication 15, dans lequel la transmission du signal de l'émetteur-relais au moyen de commande est sans fil.

18. Le système selon la revendication 15, dans lequel la sonde est alimentée par une batterie.
